Europäisches Patentamt

**European Patent Office**

**Office européen des brevets**

(19)

(11) Veröffentlichungsnummer: **0 022 553**
A1

(12) **EUROPÄISCHE PATENTANMELDUNG**

(21) Anmeldenummer: **80103916.5**

(22) Anmeldetag: **09.07.80**

(51) Int. Cl.³: **F 16 K 17/04**

(30) Priorität: **14.07.79 DE 2928502**

(43) Veröffentlichungstag der Anmeldung: **21.01.81**
**Patentblatt 81/3**

(84) Benannte Vertragsstaaten: **FR GB IT**

(71) Anmelder: **BOPP & REUTHER GMBH,**
**Carl-Reuther-Strasse 1, D-6800 Mannheim 31 (DE)**

(72) Erfinder: **Anselmann, Hans, Trajanstrasse 36,**
**D-6802 Ladenburg (DE)**
Erfinder: **Mayer, Kurt, Juttastrasse 14,**
**D-6520 Worms 15 (DE)**

(54) **Federbelastetes Sicherheitsventil.**

(57) Das insbesondere für Heißwasseranlagen bestimmte Sicherheitsventil ist mit einem Schwingungsstörglied (15) zur Dämpfung der Eigenschwingung der Ventilfeder (3) versehen, das ständig gegen ein Widerlager (7) der Ventilspindel (4) in Ventilöffnungsrichtung drückt. Die Ventilfeder (3) ist um das Mass der Gegenkraft des Schwingungsstörgliedes (15) zusätzlich vorgespannt. Als Schwingungsstörglied kann ein am Anlüfthebel (9) angreifendes Dämpfungsgewicht (15) oder eine sich einerseits am Widerlager (7) der Ventilspindel (4) und andererseits an der Spannschraube (12) der Ventilfeder (3) abstützende Dämpfungsfeder vorgesehen sein.

ACTORUM AG

Federbelastetes Sicherheitsventil

Die Erfindung bezieht sich auf ein federbelastetes Sicherheitsventil, insbesondere für Heißwasseranlagen zum Abführen von Heißwasser und/oder Dampf.

In Heißwasseranlagen steht das Medium unter normalen Betriebsbedingungen in flüssiger Form bis zum Ventilsitz an. Beim Ansprechen des Sicherheitsventils tritt zunächst Heißwasser aus dem Sicherheitsventil aus, wodurch im Kessel infolge der Absenkung des Flüssigkeitsspiegels ein Dampfpolster entsteht, so daß in der zweiten Öffnungsphase ein Dampf/ Wassergemisch aus dem Sicherheitsventil austritt. Im ungünstigen Falle kann auch reiner Sattdampf anstehen.

Da die sicherheitstechnischen Vorschriften verlagen, daß das Sicherheitsventil für den ungünstigsten Fall ausgelegt wird, muß der freie Querschnitt im Sicherheitsventil für die Sattdampfmenge mit einem ganz erheblich größeren Rauminhalt als für Heißwasser ausgelegt werden. Dadurch ist der Ventilquerschnitt bei Heißwasseraustritt um ein Vielfaches zu groß, so daß hier beim Öffnen des Sicherheitsventils sofort ein Druckzusammenbruch erfolgt, wodurch das Ventil bereits wieder einen Impuls zum Schließen erhält, bevor es ganz geöffnet hat. Nach Schließen des Sicherheitsventils baut sich der Druck schlagartig wieder auf und das Ventil öffnet sofort wieder. Dieses Öffnen und Schließen in Bruchteilen von Sekunden regt die Ventilfeder zur Eigenschwingung an, so daß das Sicherheitsventil zu flattern beginnt, wobei die Frequenz 1oo Hertz und mehr betragen kann. Durch dieses Ventilflattern werden Schäden an der Anlage verursacht.

Aufgabe der Erfindung ist es, dieses durch die Eigenschwingung der Ventilfeder verursachte Flattern des Sicherheitsventils zu verhindern.

Die Lösung dieser Aufgabe besteht darin, daß ein ständig gegen ein Widerlager der Ventilspindel in Ventilöffnungsrichtung drückendes Schwingungsstörglied zur Dämpfung der Eigenschwingung der Ventilfeder vorgesehen ist.

Durch das in Ventilöffnungsrichtung wirkende Schwingungsstörglied wird die Neigung der Ventilfeder, beim sehr
schnellen Wechsel vom Öffnungs- zum Schließvorgang in
Eigenschwingung zu kommen, bereits im Ansatz unterdrückt,
so daß sich die Eigenschwingung nicht mehr aufschaukeln
kann. Ein Flattern des Sicherheitsventils und Folgeschäden
an der Anlage werden dadurch vermieden.

Wird die Ventilfeder um das Maß der Gegenkraft des
Schwingungsstörgliedes zusätzlich vorgespannt, wird der Ansprechpunkt des Sicherheitsventils durch das Schwingungsstörglied nicht verändert.

Zweckmäßigerweise ist als Schwingungsstörglied ein in
Ventilöffnungsrichtung auf das Widerlager der Ventilspindel
einwirkendes Dämpfungsgewicht oder eine Dämpfungsfeder vorgesehen, wodurch die Unterdrückung der Eigenschwingung
der Ventilfeder mit einfachen Mitteln möglich wird. Die
Masse des Dämpfungsgewichts wirkt hierbei im bremsenden
Sinne auf die Ventilfedereigenschwingung ein, während bei
Verwendung einer Dämpfungsfeder die Eigenfrequenz dieser
Dämpfungsfeder der Eigenfrequenz der Ventilfeder entgegenwirkt.

Eine Weiterentwicklung der Erfindung wird darin gesehen,
daß das Dämpfungsgewicht am Ende des Anlüfthebels der Anlüftvorrichtung angebracht oder der Anlüfthebel selbst als
Dämpfungsgewicht ausgebildet ist, wobei der Kraftangriff
an der Anlüftmutter der Ventilspindel über die Anlüftwelle
und den Anlüftdaumen der Anlüftvorrichtung erfolgt. Dadurch
kann das Schwingungsstörglied mit geringstem Aufwand hergestellt und auch nachträglich an die Anlüftvorrichtung
des Sicherheitsventils angebracht werden.

Bei Verwendung einer Dämpfungsfeder empfiehlt sich deren
Einbau zwischen der im Kopf der Federhaube gehaltenen
Spannschraube für die Ventilfeder und der auf der Ventilspindel sitzenden Anlüftmutter der Anlüftvorrichtung. Auch

- 3 -

0022553

eine solche Dämpfungsfeder kann jederzeit nachträglich mit wenigen Handgriffen in das Sicherheitsventil eingebaut werden.

In der Zeichnung sind zwei Ausführungsbeispiele der Erfindung dargestellt. Es zeigen

Fig. 1 ein federbelastetes Sicherheitsventil für Heißwasser im Längsschnitt mit eingebautem Dämpfungsgewicht und

Fig. 2 das Sicherheitsventil nach Fig. 1 im Längsschnitt, jedoch mit eingesetzter Dämpfungsfeder.

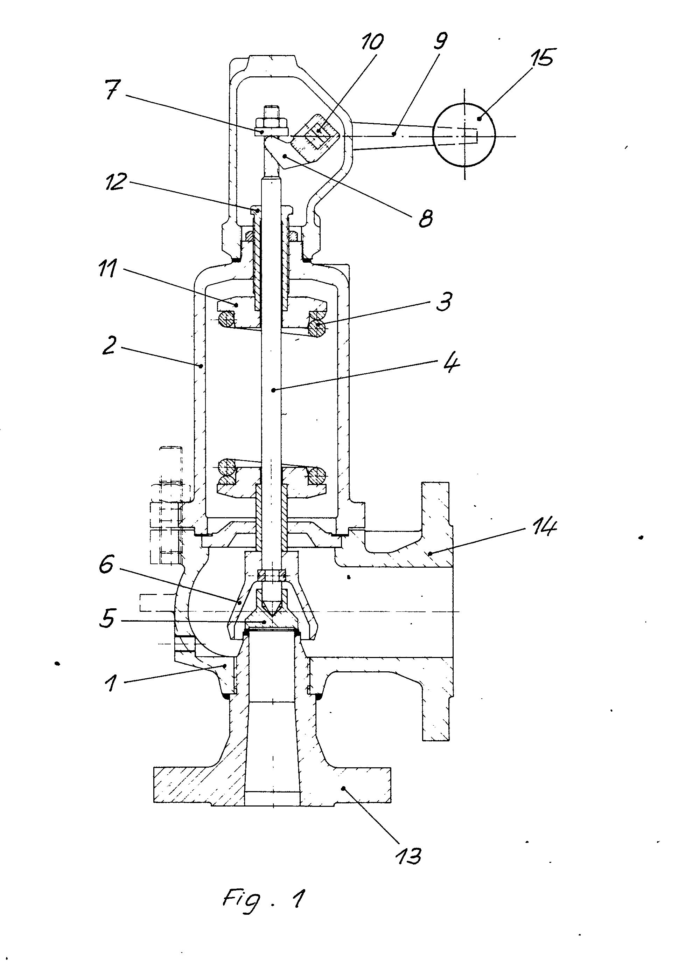

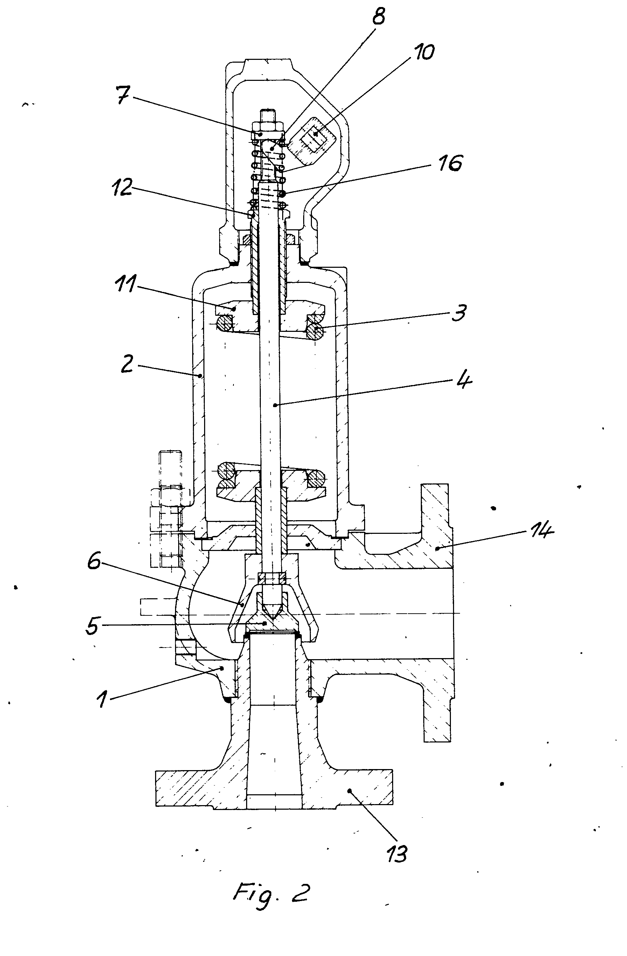

Das in den Fig. 1 und 2 dargestellte Sicherheitsventil besteht aus dem Ventilgehäuse 1 mit Federhaube 2, in der die Ventilfeder 3 eingebaut ist. Am unteren Ende der Ventilspindel 4 sitzt das Ventilverschlußstück 5 mit Hubglocke 6 und am oberen Ende der Ventilspindel ist die Anlüftmutter 7 aufgeschraubt, an der der Anlüftdaumen 8 der Anlüftvorrichtung von unten in Ventilöffnungsrichtung angreift. Der Anlüftdaumen 8 ist mit dem Anlüfthebel 9 einteilig und dieser zweiarmige Hebel ist durch die Anlüftwelle 1o schwenkbar gelagert. Der Ansprechdruck der Ventilfeder 4 ist durch Verlagern des oberen Federtellers 11 über die im Kopf der Federhaube 2 gehaltene Spannschraube 12 einstellbar. Der Eintritt des Heißwassers und/oder Sattdampfes erfolgt über den Eintrittsstutzen 13 und für den Heißwasser- oder Dampfaustritt ist der Austrittsstutzen 14 vorgesehen.

Bei dem Sicherheitsventil nach Fig. 1 ist als Schwingungsstörglied ein am Ende des Anlüfthebels 9 der Anlüftvorrichtung befestigtes Dämpfungsgewicht 15 vorgesehen. Dieses Dämpfungsgewicht 15 wirkt über den lagen Hebelarm 9 und den Anlüftdaumen 8 ständig von unten im Ventilöffnungssinne auf die Anlüftmutter 7 und damit auf die Ventilspindel 4 ein. Dadurch wird die Anregung der Ventilfeder 3 zur Eigenschwingung auf das Dämpfungsgewicht 15 übertragen, dessen

- 4 -

Masse die Eigenschwingung der Ventilfeder 3 unterdrückt.

Bei dem Sicherheitsventil nach Fig. 2 ist als Schwingungsstörglied eine Dämpfungsfeder 16 vorgesehen, die auf das obere Ende der Ventilspindel 4 aufgeschoben ist und sich einerseits an dem Bund der Spannschraube 12 und andererseits an der Anlüftmutter 7 abstützt und dadurch in Ventilöffnungsrichtung auf die Ventilspindel 4 einwirkt. Hierbei überlagern sich die unterschiedlichen Eigenfrequenzen der Dämpfungsfeder 16 und der Ventilfeder 3, wodurch die Eigenschwingung der Ventilfeder 3 unterdrückt wird.

0022553

Patentansprüche

1. Federbelastetes Sicherheitsventil, insbesondere für Heißwasseranlagen zum Abführen von Heißwasser und/oder Dampf,
d a d u r c h   g e k e n n z e i c h n e t, daß ein ständig
gegen ein Widerlager (7) der Ventilspindel (4) in Ventilöffnungsrichtung drückendes Schwingungsstörglied (15, 16)
zur Dämpfung der Eigenschwingung der Ventilfeder (3) vorgesehen ist.

2. Sicherheitsventil nach Anspruch 1, d a d u r c h   g e -
k e n n z e i c h n e t, daß die Ventilfeder (3) um das Maß
der Gegenkraft des Schwingungsstörgliedes (15, 16) zusätzlich vorgespannt ist.

3. Sicherheitsventil nach den Ansprüchen 1 und 2, d a -
d u r c h   g e k e n n z e i c h n e t, daß als Schwingungsstörglied ein in Ventilöffnungsrichtung auf das Widerlager
(7) der Ventilspindel (4) einwirkendes Dämpfungsgewicht
(15) oder eine Dämpfungsfeder (16) vorgesehen ist.

4. Sicherheitsventil nach den Ansprüchen 1 bis 3, d a -
d u r c h   g e k e n n z e i c h n e t, daß das Dämpfungsgewicht (15) am Ende des Anlüfthebels (9) der Anlüftvorrichtung angebracht oder der Anlüfthebel (9) selbst als
Dämpfungsgewicht ausgebildet ist, wobei der Kraftangriff
an der Anlüftmutter (7) der Ventilspindel (4) über die Anlüftwelle (1o) und den Anlüftdaumen (8) der Anlüftvorrichtung erfolgt.

5. Sicherheitsventil nach den Ansprüchen 1 bis 3, d a -
d u r c h   g e k e n n z e i c h n e t, daß eine Dämpfungsfeder (16) zwischen der im Kopf der Federhaube (2) gehaltenen Spannungsschraube (12) für die Ventilfeder (3)
und der auf der Ventilspindel (4) sitzenden Anlüftmutter
(7) der Anlüftvorrichtung eingebaut ist.

1/2

0022553

Fig. 1

Fig. 2

Europäisches
Patentamt

# EUROPÄISCHER RECHERCHENBERICHT

**0022553**
Nummer der Anmeldung

EP 80 10 3916.5

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| | DE - C - 899 887 (KAISER et al.)<br>* Seite 2, Zeilen 12 bis 21 *<br>--- | 1,3 | F 16 K 17/04 |
| | DE - C - 811 530 (IMO-INDUSTRI)<br>* Anspruch 1 *<br>--- | 1,3 | |
| | US - A - 4 064 906 (BERG)<br>* Spalte 2, Zeilen 18 bis 19;<br>  Fig. 1 bis 3 *<br>--- | 1 | **RECHERCHIERTE SACHGEBIETE (Int. Cl.³)** |
| | DE - A - 1 815 106 (WESTINGHOUSE)<br>* Anspruch 1; Fig.  1 *<br>--- | 1 | F 16 K 17/00 |
| | US - A - 3 289 686 (C.C. TYER, JR.)<br>* Fig. 2 *<br>--- | 1 | F 24 H  9/20 |
| | DE - C - 1 088 305 (BOPP & REUTHER)<br>* Spalte 2, Zeilen 19 bis 27; Spalte 4,<br>  Zeilen 23 bis 30; Fig. 1 *<br>--- | 1 | |
| | FR - A - 893 023 (GUIGNOT)<br>* Fig. 5 *<br>--- | 1 | **KATEGORIE DER GENANNTEN DOKUMENTE** |
| A | DE - B1 - 2 654 077 (SIEMENS)<br>* ganze Schrift *<br>--- | | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze |
| A | US - A - 3 402 734 (R.W. ROBBINS, JR.)<br>* ganze Schrift *<br>---            ./.. | | E: kollidierende Anmeldung<br>D: in der Anmeldung angeführtes Dokument<br>L: aus andern Gründen angeführtes Dokument |

| X | Der vorliegende Recherchenbericht wurde für alle Patentansprüche erstellt. | &: Mitglied der gleichen Patentfamilie, übereinstimmendes Dokument |
|---|---|---|

| Recherchenort | Abschlußdatum der Recherche | Prüfer |
|---|---|---|
| Berlin | 29-09-1980 | SCHLABBACH |

EPA form 1503.1   06.78

**Europäisches Patentamt**

## EUROPÄISCHER RECHERCHENBERICHT

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| A | <u>DE – B – 1 263 433</u> (A. SEMPELL) <br> * ganze Schrift * <br> –– | | |
| A | <u>DE – B – 1 262 714</u> (BOPP & REUTHER) <br> * ganze Schrift * <br> –– | | |
| A | <u>DE – B – 1 254 925</u> (J.M. VOITH) <br> * ganze Schrift * <br> –– | | |
| A | <u>AT – B – 158 361</u> (AUERGESELLSCHAFT) <br> * ganze Schrift * <br> –– | | RECHERCHIERTE SACHGEBIETE (Int. Cl.3) |
| A | <u>DE – C – 195 855</u> (A. RATEAU) <br> * ganze Schrift * <br> –– | | |
| A | <u>AT – B – 22 519</u> (G. SCHUEN et al.) <br> * ganze Schrift * <br> –––– | | |

EPA Form 1503.2   06.78